# FASCICULE DE BREVET EUROPEEN

(11) **EP 0 702 761 B1**
(45) Date de publication et mention de la délivrance du brevet: **18.09.2002**
(21) Numéro de dépôt: 95913206.9
(22) Date de dépôt: 06.03.1995
(51) Int. Cl.: F16D 69/02, D04H 1/48

(54) **MATERIAU DE FROTTEMENT DESTINE A EQUIPER UN DISPOSITIF METTANT EN UVRE UN FROTTEMENT EN MILIEU LIQUIDE, AINSI QUE LE PROCEDE DE REALISATION D'UN TEL MATERIAU DE FROTTEMENT ET DU DISPOSITIF QUI EN EST EQUIPE**
REIBUNGSMATERIAL FÜR EINE IN FLÜSSIGMEDIUM ARBEITENDE VORRICHTUNG, VERFAHREN ZUR HERSTELLUNG DIESES MATERIAL UND DER VORRICHTUNG
FRICTION MATERIAL FOR A DEVICE USING FRICTION IN A LIQUID MEDIUM, AND METHOD FOR MAKING SAID MATERIAL AND SAID DEVICE

(30) Priorité: 25.03.1994 FR 9403518
(43) Date de publication de la demande: 27.03.1996
(73) Titulaire: VALEO, 75017 Paris (FR)
(72) Inventeur: MENARD, Denis, F-87000 Limoges (FR); BOUTAUD, Jean-Pierre, F-87350 Panazol (FR); GUERIN, Richard, F-61100 Flers (FR); JACQ, Gérard, F-61430 Athis-de-L'orne (FR)
(74) Mandataire: Lemaire, Marc
(86) Numéro de dépôt international: FR9500320
(87) Numéro de publication internationale: WO95026473

(56) Documents cités:
- EP-A- 0 223 642
- EP-A- 0 451 320
- EP-A- 0 530 741
- DE-A- 2 935 205
- DE-A- 3 231 310
- GB-A- 601 903
- GB-A- 742 043
- US-A- 2 733 797
- US-A- 4 022 942
- DATABASE WPI Derwent Publications Ltd., London, GB; AN 92-410467 & JP-A-04 306 285 (OHWADA CARKON K.K.K) , 29 Octobre 1992

## Description

La présente invention a pour objet un matériau de frottement destiné à équiper un dispositif mettant en oeuvre un frottement en milieu liquide.

Plus particulièrement un tel matériau de frottement se présente sous la forme d'un anneau plat ou d'un tronc de cône et le dispositif qui en est équipé est un disque d'embrayage ou de frein, notamment de boîte de vitesses automatique ou y associé, fonctionnant dans l'huile, ou un anneau ou cône de synchronisation de boîte de vitesses à commande manuelle fonctionnant également dans l'huile, un tel dispositif étant installé dans un véhicule.

Les matériaux de frottement utilisés à ce jour pour les applications précitées sont de trois types : les matériaux de type papier, les matériaux frittés et les matériaux moulés graphités.

Les matériaux de type papier sont constitués essentiellement de fibres de cellulose imprégnées de résine.

Ils sont obtenus par voie humide selon un procédé usuel de fabrication de papier, c'est-à-dire en procédant à une dispersion de fibres cellulosiques dans une solution aqueuse contenant une résine puis à un essorage et à un séchage.

Un tel procédé implique nécessairement d'utiliser des fibres courtes, d'une longueur moyenne inférieure à un millimètre.

Les matériaux de ce type présentent l'inconvénient de se dégrader très rapidement dès que leur température atteint 150°C, ce qui est le cas lorsque le dispositif qui est équipé du matériau de frottement doit, sous un faible volume, transmettre ou absorber des couples élevés sous des vitesses qui, en pratique, sont de plus en plus élevées.
Cette situation se présente maintenant du fait, d'une part de l'augmentation de la puissance des moteurs thermiques des véhicules et, d'autre part, de la réduction de la taille des organes de transmission du couple moteur qui nécessitent d'augmenter la pression de serrage des organes de frottement.

Un tel matériau est décrit par exemple dans le document GB-A-742 043 conforme au préambule de la revendication 1.

Les matériaux frittés ne présentent pas cet inconvénient mais, contrairement aux matériaux du type papier, les coefficients de frottement obtenus sont faibles.

En outre, ces matériaux engendrent des vibrations et bruits nuisibles.

Les matériaux du type moulés graphités sont d'un prix de revient élevé et ne permettent pas une transmission stable d'un couple.

L'invention a pour but de pallier les inconvénients précités en proposant un matériau de frottement en milieu liquide qui présente en particulier un coefficient de frottement. important et stable, une résistance importante à l'échauffement sous des pressions de travail élevées, et une bonne résistance à l'usure.

Ce problème est résolu selon l'invention par la partie caractérisante de la revendication 1.

Selon d'autres caractéristiques prises séparément ou en combinaison :
- les charges poudreuses incorporées au mat, comprennent tout ou partie des éléments ou composés suivants : cuivre, laine de roche, carbone tel que du coke et/ou fibres de carbone réduites en poudre, graphite, silicate de zirconium, sulfure de fer, alumine, caoutchouc, diatomées ;
- des charges sous forme de pulpes sont incorporées au mat, comprenant tout ou partie des composés suivants : pulpes de verre, d'aramide, acrylique, de fibres phénoliques ;
- la résine thermodurcissable est à base de résol ;
- la résine thermodurcissable est additionnée de latex et/ou de charges poudreuses qui comprennent tout ou partie des éléments ou composés suivants : cuivre, laine de roche, carbone (coke et/ou fibres de carbone réduites en poudre, graphite), silicate de zirconium, sulfure de fer, alumine, caoutchouc, diatomées.

D'autres caractéristiques et avantages du produit et du procédé apparaîtront à la lecture de la description qui suit, d'exemples de réalisation et de mise en oeuvre de l'invention, en regard des dessins annexés qui représentent :
- à la figure 1, le schéma de principe d'une première partie de l'installation destinée à mettre en oeuvre le procédé selon l'invention ;
- à la figure 2, le schéma de principe d'une seconde partie de cette installation ;
- à la figure 3, un schéma illustrant la découpe de couronnes et de secteurs de frottement ;
- à la figure 4, une série de graphiques synthétisant des résultats de tests comparatifs.

Quatre mats de fibres (exemples A, B, C, D) sont réalisées à partir des compositions pondérales de fibres suivantes :

| **FIBRES** | **EXEMPLES** | **A** | **B** | **C** | **D** |
|---|---|---|---|---|---|
| VERRE | - Parties | 20 | - | 20 | - |
| COTON | - Parties | - | 30 | - | - |
| CERAMIQUE | - Parties | 10 | 10 | 10 | - |
| PAN (polyacrylonitrile ou préoxydées) | - Parties | 10 | - | 10 | 20 |

La longueur moyenne des fibres utilisées est la suivante :
- fibres de verre : 50 mm ;
- fibres de coton : 18 mm ;
- fibres de céramique : 12 mm ;
- fibres de PAN : 42 mm.

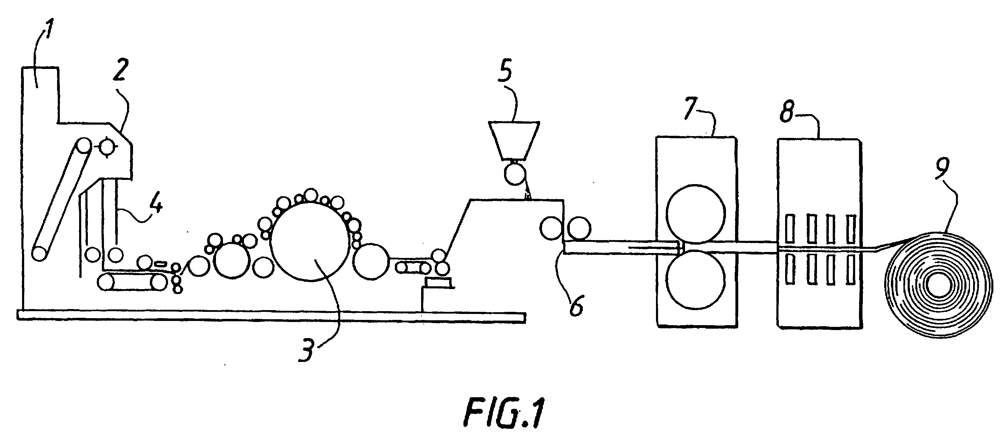

Les fibres ou mélanges de fibres ci-dessus, réalisés dans un mélangeur, sont introduits dans la chargeuse 1 (figure 1) d'un dispositif d'alimentation 2 d'une carde 3 de type laine qui comporte une cheminée d'alimentation 4.

Des charges pulvérulentes sont saupoudrées en sortie de la carde 3, sur le voile de carde formé, au moyen d'un dispositif de saupoudrage 5 (exemples C et D).

Les charges pulvérulentes présentent la composition suivante (composition pondérale rapportée aux parties pondérales de fibres ci-dessus) :

| **CHARGES PULVERULENTES** **EXEMPLES** | **A** | **B** | **C** | **D** |
|---|---|---|---|---|
| CUIVRE | - | - | - | 10 |
| LAINE DE ROCHE PULVERISEE | - | - | - | 10 |
| GRAPHITE | - | - | 10 | - |
| COKE | - | - | 10 | - |

Le voile de carde est ensuite nappé au moyen d'un nappeur 6, la nappe ainsi formée subit un traitement d'aiguilletage en deux phases : pré-aiguilletage par une pré-aiguilleteuse à rouleaux 7 et aiguilletage par une aiguilleteuse 8.

Le mat de non tissé aiguilleté ainsi réalisé est, dans l'exemple représenté, enroulé en un rouleau 9 en sortie de première partie de l'installation.

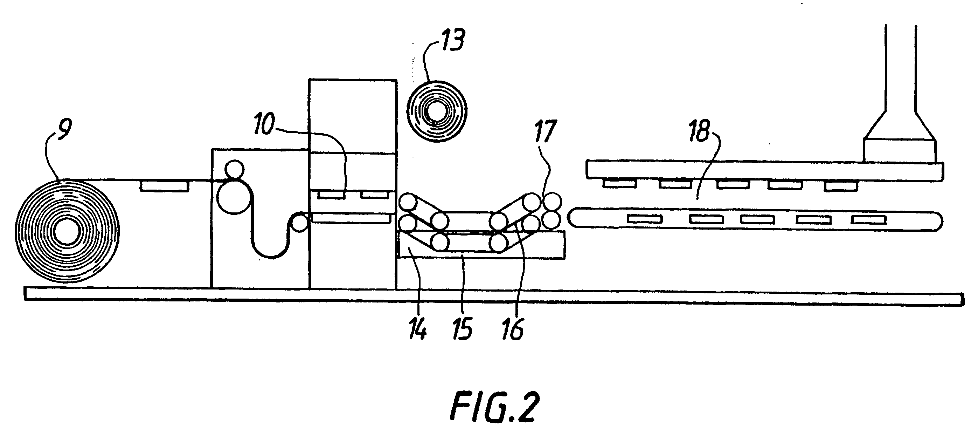

Le rouleau 9 est porté dans une seconde partie d'installation et est dévidé pour la suite du procédé d'élaboration du matériau de frottement (figure 2).

En variante non représentée, la seconde partie d'installation suit immédiatement la première partie et le mat de non tissé aiguilleté n'est pas enroulé.

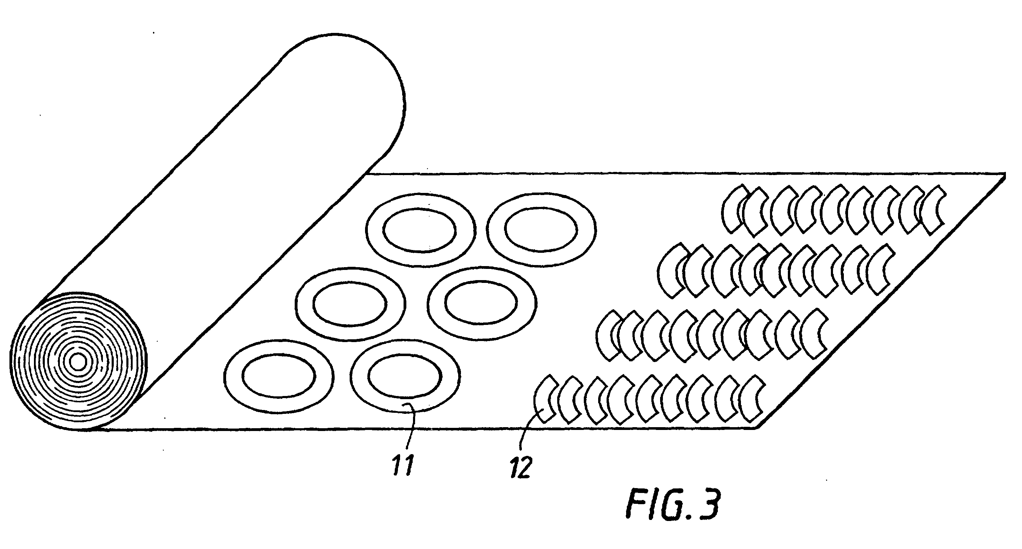

Le mat aiguilleté est conduit dans une station de découpe 10 où il est procédé à la découpe d'anneaux 11 ou de secteurs 12 tels que représentés à la figure 3 ou de toute autre forme que doit présenter le matériau de frottement.

La partie non découpée du mat, ou squelette, est dirigée vers une enrouleuse 13 pour être ensuite récupérée.

Les formes découpées 11 ou 12 sont convoyées dans un bain d'imprégnation 14 contenant une ou des résines de type thermodurcissable en solution ou dispersées dans de l'eau.

Le bain d'imprégnation présente la composition pondérale suivante, exprimée en parties, de manière cohérente avec les proportions indiquées précédemment pour les fibres et les charges.

| **BAIN D'IMPREGNATION** **EXEMPLES** | **A** | **B** | **C** | **D** |
|---|---|---|---|---|
| RESINE A BASE D'EAU | 60 | 60 | - | - |
| RESINE A BASE DE RESOL | - | - | 40 | 60 |

D'une manière générale, les types de résines suivants sont utilisables :
- les résines phénoplastes (résol ou novolaque) ;
- les résines aminoplastes (urée-formol, mélamine-formol ou combinaisons de celles-ci) ;
- les résines époxyde (éthoxyline) ;
- les résines polyimides.

En fin d'imprégnation il est procédé à un exprimage en premier lieu dans le bain (convoyeur 16) et hors du bain (rouleaux 17).

En variante, non représentée, les formes découpées 11,12 subissent, après trempage dans le bain d'imprégnation, une opération d'essorage.

Les formes découpées 11,12 sont ensuite introduites dans un tunnel de séchage à infrarouges 18 puis conditionnées.

En variante, l'opération de découpe des formes est réalisée après imprégnation, exprimage et/ou essorage et séchage.

Dans ce dernier cas, le mat imprégné peut être enroulé pour être transporté sur un poste de découpe comme montré à la figure 3.

Chaque forme découpée, anneau ou pluralité de secteurs formant un anneau, est placée dans un moule qui présente, selon l'équipement auquel est destiné le matériau de frottement, un fond plat ou en tronc de cône ou toute autre forme, rainuré ou non.

Un support métallique est placé dans le moule sur l'anneau ou la pluralité de secteurs.

Le cas échéant, un deuxième anneau est placé sur le support métallique, à l'opposé dudit anneau ou de ladite pluralité de secteurs formant un anneau.

Un support métallique est placé dans le moule sur l'anneau ou sur la pluralité de secteurs formant un anneau.

Le cas échéant, un deuxième anneau ou une pluralité de secteurs formant un anneau est placé sur le support métallique, à l'opposé dudit anneau ou de ladite pluralité de secteurs formant un anneau.

Le moule est refermé, des cales d'épaisseur étant disposées de manière à contrôler et limiter le déplacement d'un piston de fermeture du moule.

Une cuisson sous pression est réalisée dans le moule, qui assure en outre l'adhésion dudit anneau, et le cas échéant dudit second anneau, au support métallique.

Le moule est ouvert et le dispositif revêtu du matériau de frottement est refroidi.

Avantageusement, les cales d'épaisseur limitant le déplacement du piston sont dimensionnées de telle sorte que la porosité du matériau de frottement soit comprise entre 20 % et 70 % et la température de cuisson est comprise entre 130°C et 220°C.

De manière à effectuer des tests comparatifs avec un matériau de frottement connu du type papier, on réalise deux échantillons de matériau de frottement (disque d'embrayage) ayant la composition pondérale suivante :
- fibres de cellulose : 30 % (longueur : 2 à 20 mm) ;
- résine phénolique : 31 %
- diatomées : 23 %
- fibres aramides : 10 % (longueur : 6 à 20 mm)
- quartz : 5 %
- sulfate de sodium : 1 %

Quatre séries de trois disques de friction d'embrayage réalisés conformément à l'invention à partir des compositions des exemples A, B, C, D précédents et deux séries de trois disques de friction d'embrayage de type papier ayant les compositions ci-dessus ont subi des tests d'endurance dans les conditions indiquées ci-après.

Trois disques d'une même série, correspondant à un même exemple de réalisation, sont placés dans une machine d'essais du type défini par la norme SAE II (norme des Etats-Unis d'Amérique).

L'essai est effectué dans un bain d'huile portée à 114°C. Une circulation d'huile étant par ailleurs prévue avec un débit compris entre 2 et 3 litres par minute.

L'essai comporte trois séries de cycles.

Chaque cycle consiste à freiner jusqu'à arrêt, une masse d'inertie préalablement lancée à une vitesse de rotation de 3600 tours par minute.

Après chaque cycle la masse d'inertie est relancée à la vitesse indiquée ci-dessus.

Un intervalle de temps de 30 secondes est prévu entre chaque début de cycle.

La première série comprend 50 cycles où la pression spécifique de serrage des disques est de 0,5 Mpa, l'inertie étant de 0,213 m².kg.

La deuxième série comprend 2400 cycles où la pression spécifique de serrage des disques est de 1,5 Mpa, l'inertie étant de 0.501 m².kg.

La troisième série est identique à la première.

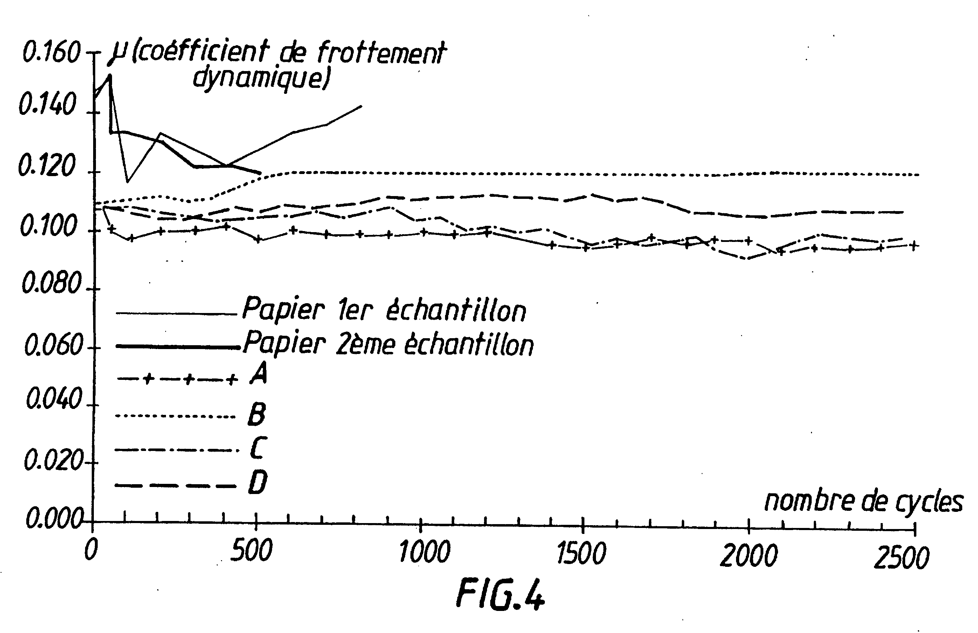

Les graphiques de la figure 4 représentent l'évolution du coefficient de friction dynamique de chacun des six échantillons au cours des cycles d'endurance définis précédemment.

On constate qu'entre 500 et 800 cycles, une garniture papier est détruite alors que le matériau de frottement, selon l'invention, conserve son intégrité après 2500 cycles (arrêt des tests).

De plus, on constate une stabilité remarquable du coefficient de friction du matériau, selon l'invention, au cours des cycles, à un niveau très proche de celui d'un matériau de type papier.

Des variantes de réalisation peuvent être utilisées.

En particulier, des charges sous forme de pulpes peuvent être incorporées au mat et notamment des pulpes choisies parmi le groupe des pulpes de verre, d'aramide, d'acrylique, de fibres phénoliques.

Il est en outre, tout à fait possible d'incorporer les charges dans la résine liquide au lieu ou, en plus, de les saupoudrer sur le mat.

Les charges peuvent aussi être diluées ou dispersées dans un liquide approprié constituant un premier bain d'imprégnation du mat, une seconde imprégnation étant alors prévue afin d'assurer l'apport de résine.

En outre, on peut utiliser une résine solide, en poudre, qui est saupoudré sur le mat en même temps que les charges. Ce mat est ensuite mis à épaisseur sous presse à 60° C pendant 2 s ; il n'y à dans cette variante ni aiguilletage, ni imprégnation.

## Revendications

1. Matériau de frottement destiné à équiper un dispositif mettant en oeuvre un frottement en milieu liquide tel que, plus particulièrement, un disque d'embrayage ou de frein, notamment de boîte de vitesses automatique ou y associé, un anneau ou cône de synchronisation de boîte de vitesses à commande manuelle, **caractérisé en ce qu'**il est constitué par un mat de fibres imprégné d'une résine de type thermodurcissable, **en ce que** le mat de fibres est un mat de fibres cardées, **en ce que** la résine du type thermodurcissable comporte un solvant polaire aqueux, **en ce que** lesdites fibres présentent une longueur au moins égale à 12 mm, **en ce que** la longueur moyenne des fibres est au plus égale à 120 mm, **en ce que** les fibres sont choisies parmi le groupe des fibres de verre, de laine, de coton, de céramique, de polyacrylonitrile, de polyacrylonitrile préoxydées, d'aramide et **en ce que** des charges poudreuses sont incorporées au mat.

2. Matériau de frottement selon la revendication 1, **caractérisé en ce que** lesdites charges poudreuses comprennent tout ou partie des éléments ou composés suivants : cuivre, laine de roche, carbone, tel que du coke et/ou fibres de carbone réduites en poudre, graphite, silicate de zirconium, sulfure de fer, alumine, caoutchouc, diatomées.

3. Matériau de frottement selon la revendication 1 ou 2, **caractérisé en ce que** des charges sous forme de pulpes sont incorporées au mat.

4. Matériau de frottement selon la revendication 3, **caractérisé en ce que** lesdites pulpes comprennent tout ou partie des pulpes de verre, d'aramide, acrylique, de fibres phénoliques.

5. Matériau de frottement selon l'une quelconque des revendications précédentes, **caractérisé en ce que** la résine thermodurcissable est à base de résol.

6. Matériau de frottement selon l'une quelconque des revendications précédentes **caractérisé en ce que** la résine thermodurcissable est additionnée de latex.

## Patentansprüche

1. Reibungsmaterial für eine in flüssigem Medium arbeitenden Vorrichtung, wie insbesondere eine Kupplungs- oder Bremsscheibe, insbesondere für ein Automatikgetriebe oder damit verbunden, oder ein Synchronring oder Synchronkegel eines Handschaltgetriebes,
**dadurch gekennzeichnet,**
**daß** es aus einer mit einem Harz des Typs Duroplast imprägnierten Fasermatte besteht, daß die Fasermatte eine Krempelfasermatte ist, daß das Harz des Typs Duroplast ein wäßriges polares Lösungsmittel umfaßt, daß die besagten Fasern eine Länge wenigstens gleich 12 mm aufweisen, daß die durchschnittliche Länge der Fasern wenigstens gleich 120 mm ist, daß die Fasern aus der Gruppe der Glas-, Woll-, Baunwoll-, Keramik-, Polyacrylnitril-, voroxidierten Polyacrylnitril-, Aramidfasern ausgewählt sind und daß pulvrige Füllstoffe in die Matte eingebracht sind.

2. Reibungsmaterial nach Anspruch 1, **dadurch gekennzeichnet, daß** die besagten pulvrigen Füllstoffe alle oder einen Teil der folgenden Elemente oder Verbindungen umfassen: Kupfer, Steinwolle, Kohlenstoff, wie etwa Koks und/oder zu Pulver verarbeitete Kohlenstoffasern, Graphit, Zirkoniumsilikat, Eisensulfid, Aluminiumoxid, Kautschuk, Diatomeen.

3. Reibungsmaterial nach Anspruch 1 oder 2, **dadurch gekennzeichnet, daß** Füllstoffe in Form von breiigen Massen in die Matte eingebunden sind.

4. Reibungsmaterial nach Anspruch 3, **dadurch gekennzeichnet, daß** die besagten Massen alle oder einen Teil der folgenden Verbindungen umfassen: Glas-, Aramid-, Acryl-, Phenolfasermassen.

5. Reibungsmaterial nach einem der vorangehenden Ansprüche, **dadurch gekennzeichnet, daß** der Duroplast auf Resolbasis ausgeführt ist.

6. Reibungsmaterial nach einem der vorangehenden Ansprüche, **dadurch gekennzeichnet, daß** dem Duroplast Latex zugesetzt ist.

## Claims

1. Friction material intended to equip a device employing friction in a liquid medium, more particularly such as a brake or clutch disk, especially of an automatic gearbox or associated with it, a manual-control gearbox synchronisation cone or ring, **characterised in that** it consists of a mat of fibres impregnated with a thermosetting-type resin, **in that** the mat of fibres is a mat of carded fibres, **in that** the resin of the thermosetting type includes an aqueous polar solvent, **in that** the said fibres feature a length at least equal to 12 mm, **in that** the average length of the fibres is equal to 120 mm at most, **in that** the fibres are chosen from among the group of fibres of glass, wool, cotton, ceramic, polyacrylonitrile, pre-oxidised polyacrylonitrile and aramid, and **in that** powder-type fillers are incorporated into the mat.

2. Friction material according to Claim 1, **characterised in that** the said powder-type fillers comprise all or some of the following elements or compounds: copper, rockwool, carbon, such as coke and/or carbon fibres reduced to powder, graphite, zirconium silicate, aluminium, iron sulphide, rubber, diatoms.

3. Friction material according to Claim i or 2, **characterised in that** fillers in pulp form are incorporated into the mat.

4. Friction material according to Claim 3, **characterised in that** the said pulps comprise all or some of pulps of glass, aramid, acrylic, phenolic fibres.

5. Friction material according to any one of the preceding claims, **characterised in that** the thermosetting resin is based on resol.

6. Friction material according to any one of the preceding claims, **characterised in that** the thermosetting resin has latex added to it.
